Europäisches Patentamt

**European Patent Office**

**Office européen des brevets**

(19)

(11) Publication number: **0 068 467**
A1

(12)

# EUROPEAN PATENT APPLICATION

(21) Application number: **82105649.6**

(22) Date of filing: **25.06.82**

(51) Int. Cl.³: **C 08 J 9/22**, C 08 J 9/18
// C08L23/10

(30) Priority: **27.06.81 JP 99864/81**

(43) Date of publication of application: **05.01.83**
**Bulletin 83/1**

(84) Designated Contracting States: **DE FR GB**

(71) Applicant: **Japan Styrene Paper Corporation,**
**1-1, 2-chome, Uchisaiwai-cho, Chiyoda-ku Tokyo (JP)**

(72) Inventor: **Akiyama, Hiroyuki, 1-11-17, Nakahara,**
**Hiratsuka-shi Kanagawa-ken (JP)**
Inventor: **Hirosawa, Kuninori, 923-48, Numame,**
**Isehara-shi Kanagawa-ken (JP)**

(74) Representative: **Dr. E. Wiegand Dipl.-Ing. W. Niemann**
**Dr. M. Kohler Dipl.-Ing. C. Gernhardt Dipl.-Ing. J. Glaeser**
**Patentanwälte, Herzog-Wilhelm-Strasse 16,**
**D-8000 München 2 (DE)**

(54) **Polypropylene foamed molded articles and process for production thereof.**

(57) A foamed molded article of a polypropylene resin having a density of from 0.011 to 0.026 g/cm³ and a closed cell proportion of at least 80%, said molded article being obtained by filling preliminarily-formed particles of the polypropylene resin in a mold having a capability of enclosing the particles and allowing escape of gases therefrom, and foaming the particles by heating; and a process for the production thereof.

EP 0 068 467 A1

POLYPROPYLENE FOAMED MOLDED ARTICLES
AND PROCESS FOR PRODUCTION THEREOF

This invention relates to a polypropylene foamed molded article and a process for its production.

Foamed molded articles obtained by a method comprising filling preliminarily-foamed particles in a mold having a capability of enclosing the particles and allowing escape of gases therefrom, and foaming them by heating, generally known as a bead molding method, have been utilized in a wide range of applications as cushioning materials, packaging materials, thermal insulating materials, building materials, etc. according to their inherent properties. Polystyrene foamed articles obtained by the bead molding method have generally been in commercial use as this type of molded articles. However, since they have the serious defect of being brittle and also have inferior chemical resistance, it has long been desired to improve these properties of the polystyrene foamed articles. In an attempt to remedy these defects, molded articles composed of crosslinked foamed polyethylene have been proposed. However, these polyethylene foamed articles have the defect that they cannot be obtained in low density (namely, as highly expanded articles). If an attempt is made to obtain by all means a polyethylene foamed article having a low density, the resulting article has an open-cellular structure and shows inferior properties typified by a high water absorption and a low rebound. Such products are not commercially feasible. On the other hand, an attempt to obtain a product having a high proportion of closed cells inevitably results in obtaining a product having a high density.

It is an object of this invention therefore to provide a polypropylene foamed molded article having excellent properties which completely eliminates the defects of the aforesaid polyethylene foamed article.

Another object of this invention is to provide a foamed molded article which has excellent cushioning and rebounding properties, a high mechanical strength and a reduced residual stress, and is light in weight.

We have now found that if a polypropylene resin is employed as a starting material in the bead molding method, the above objects can be achieved, and a foamed molded article having a low density and yet a high proportion of closed cells can be obtained.

Thus, according to this invention, there is provided a polypropylene foamed molded article having a density of from 0.011 to 0.026 $g/cm^3$ and a closed cell proportion of at least 80%, said molded article being obtained by filling preliminarily-foamed particles of the polypropylene resin in mold having a capability of enclosing the particles and allowing escape of gases therefrom, and foaming them by heating.

The polypropylene resin constituting the foamed molded article of this invention include polypropylene, and a polypropylene-type resins exemplified by an ethylene-propylene copolymer, and a mixture of an ethylene-propylene copolymer with low-density polyethylene and/or an ethylene-vinyl acetate copolymer. The polypropylene resins may be in the crosslinked or non-crosslinked state, preferably in the non-crosslinked state.

The foamed molded article of this invention should have a density of from 0.011 to 0.026 $g/cm^3$. If its density is less than 0.011 $g/cm^3$, its mechanical strength and dimensional stability are low, and when it is used as a cushioning material, the range of suitability for cushioning becomes narrow. On the other hand, if its density exceeds 0.026 $g/cm^3$, its surface is too hard, and when it is used as a cushioning material, it has the inferior ability to protect the surface of merchandise to be protected and is likely to injure it. Moreover, it has poor flexibility.

The preferred range of density is from 0.012 to 0.023 $g/cm^3$.

The foamed molded article of this invention should have such a cellular structure that its closed cell proportion is at least 80%. If its closed cell proportion is less than 80%, it has a high water absorption and residual stress and a low rebound, and when it is used as a cushioning material, the range of suitability for cushioning is narrow. Thus, if an article having a heavy weight is placed on it, the cushioning material is compressed and the desired cushioning effect cannot be obtained. The preferred closed cell proportion is at least 90%. The closed cell proportion can be determined by making calculations in accordance with the method of W. J. Remington and R. Pariser on the basis of the specific gravity of the sample measured by an air comparing-type specific gravity meter made by Toshiba-Beckman.

The foamed molded article of this invention can be produced, for example, by a process which comprises pressurizing preliminarily-foamed particles of a polypropylene resin with an inorganic gas such as air or a mixture of an inorganic gas and a volatile blowing agent, filling the preliminarily-foamed particles having an elevated pressure imparted to their inside in a mold having a capability of enclosing the particles and allowing escape of gases therefrom, and heating them, thereby expanding the particles according to the configuration of the mold and bonding the particles to each other at the fused surface of the particles.

The preliminarily-foamed particles can be produced, for example, by dispersing particles of the polypropylene resin and a volatile blowing agent in water in a closed vessel, heating the dispersion to a temperature above a point at which the particles soften to impregnate the blowing agent into the particles, and thereafter, opening one end of the vessel

0068467

to release the particles and water simultaneously into an atmosphere kept at a lower pressure than the inside of the vessel while maintaining the pressure of the inside of the vessel at a predetermined value.

As stated hereinabove, the foamed molded article of this invention has unexpected excellent properties, such as excellent cushioning and rebounding properties, a low residual stress, a high mechanical strength, a broad range of suitability for cushioning, high dimensional stability, moderate flexibility with the great ability to protect the surface of merchandise to be protected, a low water absorption, high heat resistance, excellent chemical resistance and light weight. Accordingly, it is useful in a wide range of applications as cuhioning materials, packaging materials, thermal insulating materials, building materials, etc.

The following Example specifically illustrates the present invention.

Example

100 Parts by weight of each of resin particles, an amount indicated in Table 1 of dichlorodifluoromethane as a volatile blowing agent, 0.5 part by weight of aluminum oxide as a dispersing agent and 300 parts by weight of water were put in a closed vessel, and with stirring, these materials were heated to a predetermined temperature indicated in Table 1 for one hour to thereby impregnate the blowing agent into the resin particles. One end of the vessel was opened, and the resin particles and water were simultaneously released into the atmosphere while maintaining the pressure of the inside of the vessel at a predetermined value. The resin particles were dried to form preliminarily-foamed particles.

In the above experiment, preliminarily-foamed particles having various densities were obtained by using an ethylenepropylene random copolymer (ethylene content 3% by weight) and low-dinsity polyethylene and varying the amount of dichlorodifluoromethane.

- 5 -

0068467

Each type of the preliminarily-foamed particles was pressurized with air in a pressure vessel, and filled in a mold having a capability of enclosing the particles and allowing escape of gases therefrom. The particles were then heated by steam to expand the particles according to the configuration of the mold.

The closed cell proportions, densities and other properties of the resulting foamed molded articles are shown in Table 2.

Table 1

(Preliminarily-foamed particles)

| | | Synthetic resin | Amount of dichloro-difluoro-methane (parts by weight) | Temper-ature of heating ($^{\circ}C$) | Bulk density $(g/cm^3)$ |
|---|---|---|---|---|---|
| In-vention | 1 | Ethylene-propylene random copolymer (ethylene content 3% by weight) | 10 | 143 | 0.022 |
| | 2 | Ditto | 13 | 143 | 0.017 |
| | 3 | Ditto | 18 | 142 | 0.011 |
| Com-parison | 1 | Ditto | 26 | 140 | 0.009 |
| | 2 | Ditto | 16 | 137 | 0.029 |
| | 3 | Low-density polyethylene | 28 | 110 | 0.034 |
| | 4 | Ditto | 37 | 110 | 0.022 |

Table 2 (Foamed molded articles)

| | | Synthetic resin | Closed cell proportion (%) | Density $(g/cm^3)$ | Residual stress (%) (*1) | Compression hardness $(kg/cm^2)$ (*2) | Ability to protect the surface of merchandise to be protected (*3) | Heat resistance (thermal dimensional stability) (%) (*4) |
|---|---|---|---|---|---|---|---|---|
| Invention | 1 | Ethylene-propylene random copolymer (ethylene content 3% by weight) | 97 | 0.023 | 9 | 0.81 | No injury | -5 |
| | 2 | Ditto | 92 | 0.018 | 11 | 0.60 | Ditto | -7 |
| | 3 | Ditto | 83 | 0.012 | 13 | 0.36 | Ditto | -10 |
| Comparison | 1 | Ditto | 75 | 0.010 | 23 | 0.28 | Ditto | -13 |
| | 2 | Ditto | 97 | 0.030 | 7 | 1.09 | Injury caused | -3 |
| | 3 | Low-density polyethylene | 83 | 0.035 | 7 | 0.53 | No injury | -80 |
| | 4 | Ditto | 73 | 0.023 | 25 | 0.30 | Ditto | -90 |

(*1): After the sample was compressed 75%, the stress was removed. The residual stress immediately then was measured.

(*2): Measured in accordance with JIS K-6767.

(*3): The occurrence of injury on the surface of a decorative plate by rubbing was observed.

(*4): A change in volume was measured after heating at 100°C for 24 hours. The mark "-" shows the occurrence of shrinkage.

WHAT WE CLAIM IS:

1.          A foamed molded article of a polypropylene resin having a density of from 0.011 to 0.026 $g/cm^3$ and a closed cell proportion of at least 80%, said molded article being obtained by filling preliminarily-foamed particles of the polypropylene resin in a mold having a capability of enclosing the particles and allowing escape of gases therefrom, and foaming the particles by heating.

2.          The foamed molded article of claim 1 which has a density of from 0.012 to 0.023 $g/cm^3$.

3.          The foamed molded article of claim 1 which has a closed cell proportion of at elast 90%.

4.          The foamed molded article of claim 1 wherein the polypropylene resin is one member selected from the group consisting of polypropylene, an ethylene-propylene copolymer, and a mixture of an ethylene-propylene copolymer with low density polyethylene and/or an ethylene-vinyl acetate copolymer.

5.          A process for producing a foamed molded article of a polypropylene resin having a density of from 0.011 to 0.026 $g/cm^3$ and a closed cell proportion of at least 80%, which comprises pressurizing preliminarily-foamed particles of the polypropylene resin with an inorganic gas or a mixture of an inorganic gas and a volatile blowing agent, then filling the preliminarily-foamed particles having an elevated pressure imparted to their inside in a mold having a capability of enclosing the particles and allowing escape of gases therefrom, and thereafter heating them, thereby expanding the particles according to the configuration of the mold and bonding them to each other at the fused surface of the particles.

6.          The process of claim 5 wherein the preliminarily-foamed particles of the polypropylene resin are produced by dispersing particles of the polypropylene resin and a volatile blowing agent in water in a closed vessel, heating the dispersion to a temperature above a point at which the particles soften to impregnate the blowing agent

0068467

into the particles, and thereafter, opening one end of
the vessel to release the particles and water simultaneously
into an atmosphere kept at a lower pressure than the
inside of the vessel while maintaining the pressure of
the inside of the vessel at a predetermined value.

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| A | US-A-3 655 542 (I.TAMAI et al.) *Claim 1; examples 6,7,15 and especially 16* | 1,3,4 | C 08 J 9/22 C 08 J 9/18 // C 08 L 23/10 |
| A | US-A-3 823 213 (F.STASTNY et al.) *Claim 2; example 7* | 1,3 | |
| A | US-A-3 504 068 (J.ZIZLSPERGER et al.) *Claim 1; example 4* | 1,4,5 | |
| A | DE-A-2 107 683 (B.A.S.F) *Claim; example 2* | 1,4,5, 6 | |
| P | EP-A-0 053 333 (JAPAN STYRENE PAPER) *Claims 1,4; page 5, lines 10-20; example; table 2* | 1,2,4, 5,6 | TECHNICAL FIELDS SEARCHED (Int. Cl. 3) |
| P | GB-A-2 080 813 (JAPAN STYRENE PAPER) *Claims 1,2,3,5; examples 4-6* & DE - A - 3 125 024 & FR - A - 2 485 432 | 1,4-6 | C 08 J |
| A | GB-A-1 445 474 (KANEGAFUCHI KAGAKU KOGYO K.K.) *Claims 1,10* | 5 | |

The present search report has been drawn up for all claims

| Place of search | Date of completion of the search | Examiner |
|---|---|---|
| THE HAGUE | 07-10-1982 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82